# NEUE EUROPÄISCHE PATENTSCHRIFT

(11) **EP 0 804 347 B2**
(45) Veröffentlichungstag und Bekanntmachung des Hinweises auf die Entscheidung über den Einspruch: **01.09.2004**
(45) Hinweis auf die Patenterteilung: 03.05.2000
(21) Anmeldenummer: 96901738.3
(22) Anmeldetag: 19.01.1996
(51) Int. Cl.: B60K 7/00

(54) **ANTRIEBSEINRICHTUNG FÜR EIN ELEKTRISCH BETRIEBENES FAHRZEUG**
PROPULSION UNIT FOR AN ELECTRICALLY OPERATED VEHICLE
UNITE DE PROPULSION POUR VEHICULE MU ELECTRIQUEMENT

(30) Priorität: 23.01.1995 DE 19501926; 09.05.1995 DE 19516896
(43) Veröffentlichungstag der Anmeldung: 05.11.1997
(73) Patentinhaber: Schmid, Egon, 88605 Sauldorf 3 (DE)
(72) Erfinder: Schmid, Egon, 88605 Sauldorf 3 (DE)
(74) Vertreter: Weiss, Peter, Dr. rer. nat.
(86) Internationale Anmeldenummer: PCT/EP1996/000217
(87) Internationale Veröffentlichungsnummer: WO 1996/022895

(56) Entgegenhaltungen:
- EP-A- 0 588 478
- DE-A- 2 403 463
- DE-A- 3 924 817
- DE-A- 4 218 888
- DE-U- 9 201 088
- DE-U- 9 414 054
- FR-A- 2 330 557
- US-A- 2 506 146
- "Barth-Synchron-Radnaben-Antrieb für Elektrofahrzeuge" (Prospektblatt)
- "Radnabenmotoren; Antriebe für Ansprüche" (Prospektblatt der Fa. Heinzmann, 09/1994)

## Beschreibung

Die Erfindung betrifft eine Antriebseinrichtung für ein elektrisch betriebenes Fahrzeug, insbesondere für einen Rollstuhl, mit zumindest einer Felge mit Felgenbett und einer Achswelle, wobei zwischen der Felge und der Achswelle ein Ringkanal zur Aufnahme eines Motors und ein ringkanalförmiger Bremsraum zur Aufnahme einer Bremse ausgebildet sind, wobei Ringkanal und Bremsraum durch einen feststehenden Innengehäusering voneinander getrennt sind, und die Achswelle drehfest mit der Felge verbunden und gegenüber dem feststehenden Innengehäusering über zwei lager drehbar abgestützt ist.

Elektrisch betriebene Fahrzeuge gibt es in vielfältiger Form und Ausführung. Hierzu gehören beispielsweise Elektro-PKW, Fahrzeuge im Innenbereich von Bahnhöfen und Industriehallen, Kinderfahrzeuge und insbesondere auch Rollstühle. Meist sind hier die Antriebsräder über eine Achswelle mit einem Getriebe verbunden, weshalb die Energieaufnahme derartiger Antriebe wesentlich erhöht ist.

In neuerer Zeit wird dazu übergegangen, den Antrieb und insbesondere den Motor in das Rad selbst zu integrieren, wobei hier sogenannte Radnabenantriebe oder Trommelmotoren bekannt sind. Hierzu zählen die elektronisch kommutierten Radnabenmotoren.

Diese Radnabenmotoren sind aber ebenfalls über ein Getriebe mit der Antriebswelle verbunden, so dass nach wie vor erhebliche Energie verlorengeht.

Eine Antriebseinrichtung der o.g. Art ist aus dem Deutschen Gebrauchsmuster 94 14 054 bekannt. Dort ist in einem Bremsraum eine Bremsscheibe mit radialem Spiel eingepasst. Ferner ist eine Anpressplatte vorgesehen, welche mittels mehrerer Druckfedern die Bremsscheiben gegen einen Stator presst.

Der vorliegenden Erfindung liegt die Aufgabe zugrunde, eine Antriebseinrichtung der oben genannten Art zu schaffen, mit welcher das Fahrzeug so energiearm und geräuscharm wie möglich betrieben werden kann und die eine geringstmögliche Baubreite aufweist. Auch soll der Zusammenbau und die Demontage erleichtert werden.

Zur Lösung dieser Aufgabe führt, dass sich der ringkanalformige Bremsraum getrennt durch den Innengehäusering innerhalb des Ringkanals zwischen den zwei Lagern befindet.

Gemäss der vorliegenden Erfindung ist die Stoppbremse in einem Ringkanal der Felge integriert, so dass kein zusätzlicher Raum in Anspruch genommen werden muss. Die Bremsscheiben sind entlang einer Achse der Achswelle selbst aufgesetzt, wobei sie jedoch gegenüber der Achswelle axial verschiebbar sind. Dies wird gewährleistet durch eine Keilnutenverbindung zwischen Bremsscheibe und Achswelle, wobei die Bremsscheibe bevorzugt aus einem für Bremsbeläge verwendeten Material hergestellt ist.

Den Bremsscheiben sind wiederum entlang der Achse der Achswelle verschiebbare Bremsringe zugeordnet. Diese Bremsringe sind bevorzugt über Keilnutenverbindungen mit dem Innengehäusering gekoppelt.

Zur Abbremsung des Fahrzeuges ist dem äussersten Bremsring ein Kraftspeicher zugeordnet, der den äussersten Bremsring gegen seine benachbarte Bremsscheibe drückt. Dieser Druck wird von Bremsscheibe zu Bremsring und umgekehrt weitergegeben. Hierdurch erfolgt ein wirkungsvolles Abbremsen des Fahrzeuges.

Um die Bremswirkung dagegen aufzuheben, ist eine axial wirkende Magnetspule dem äussersten Bremsring zugeordnet. Diese Magnetspule wirkt gegen die Kraft des Kraftspeichers und zieht den äussersten Bremsring an, so dass die Bremsscheiben zwischen den Bremsringen frei laufen können. Dabei befindet sich die Magnetspule in einem Ringraum in einem ferritischen Ring. Fällt der Strom aus, so lässt die Magnetspule den äussersten Bremsring los, und es findet eine sofortige Abbremsung statt. Soll dann die Bremse wieder gelöst werden, so geschieht dies über über die Magnetspule oder, falls die Elektrik immer noch ausgefallen ist, über eine Einrichtung, mittels derer der äusserste Bremsring bspw. von Hand gegen die Kraft des Kraftspeichers axial bewegt wird. Diese Einrichtung kann aus beliebigen Hebeln, Exzenterhebeln oder Hebelanordnungen bestehen.

Die Bremsscheiben und auch die Bremsringe befinden sich zwischen zwei Lagern, so dass ein sehr gutes Kräfteverhältnis beim Abbremsen gewährleistet ist. Es kann nicht zu einem Verziehen in Folge der Bremswirkung kommen.

Hervorzuheben ist vor allem, dass beim Lösen der Bremse aber auch beim Einleiten des Bremsvorganges kaum ein Geräusch entsteht. Es ist lediglich ein leichtes Klicken beim Anziehen des äussersten Bremsringes durch die Magnetspule zu hören. Dies stellt einen grossen Vorteil gegenüber den bisher bekannten Bremseinrichtungen dar.

Ein weiterer wesentlicher Vorteil dieser erfindungsgemässen Antriebseinrichtung liegt darin, dass die Baubreite des gesamten Antriebes auf ein Minimum reduziert ist. Der gesamte Antrieb und auch das Bremssystem ist innerhalb der Felge selbst angeordnet. Mit dem statischen Teil dieser Antriebseinrichtung ist dann ein Chassis eines Fahrzeuges oder bspw. der Stuhl eines Rollstuhles auf beliebige Art und Weise verbunden.

Motor und Bremse sind über den Innengehäusering voneinander getrennt. Dieser Innengehäusering ist Teil des statischen Teils und bietet sich zur Verbindung mit dem Stuhl bzw. dem Chassis des Fahrzeuges an. Ferner soll der Statorteil des Motors ebenfalls mit diesem Innengehäusering drehfest verbunden sein.

Der Rotorteil ist dagegen an der Felge selbst um das Statorteil herum angeordnet. Zum Statorteil hin ist der Rotorteil mit entsprechenden Magnetstreifen bestückt, die zum Statorteil hin einen Luftspalt bilden. Auf diese Weise dreht der Rotorteil um den Statorteil.

Bevorzugt werden Permanentmagnetstreifen benutzt, die eine hohe Energieübertragung gewährleisten.

Durch die gewählte Anordnung ist es möglich, das Innengehäuse über die zwei Lager gegen die Achswelle abzustützen, wobei diese Lager relativ weit voneinander beabstandet sind. Damit ist für das entsprechende Rad ein maximaler Lagerabstand erreicht bei gleichzei-tig minimalster Baubreite des gesamten Antriebes. Ferner können Lagerkonstruktionen verwendet werden, die sich ohne weiteres spielfrei einstellen lassen. Als Lager bieten sich vor allem Wälzlager (Schulter-Schräglager) an, die eine grösstmögliche Laufruhe gewährleisten.

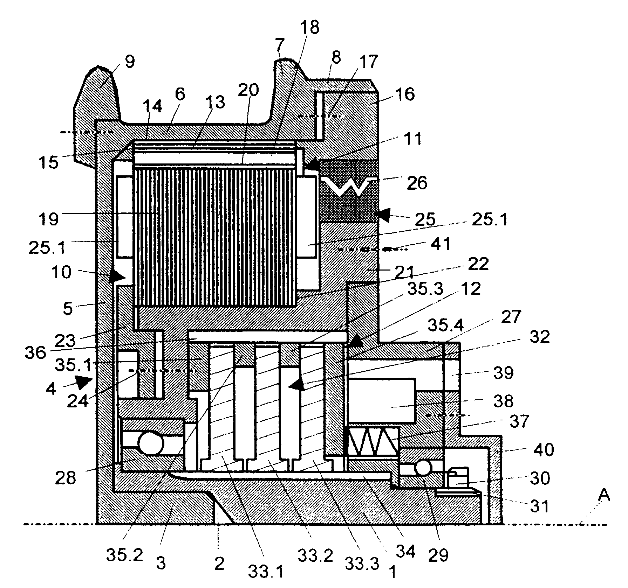

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur einen Teilquerschnitt durch eine erfindungsgemässe Antriebseinrichtung für ein elektrobetriebenes Fahrzeug.

Im vorliegenden Fall handelt es sich um einen sog. Radnabenantrieb oder Trommelmotor ohne Getriebe. In einer Achswelle 1 ist stirnwärtig ein Sackloch 2 eingeformt, in welches ein Zapfen 3 einer Felge 4 eingreift. Der Zapfen 3 ist in dem Sackloch 2 der Achswelle 1 drehfest festgelegt, bspw. eingeschrumpft, geklebt od. dgl.

Der Zapfen 3 ragt etwa mittig aus einer Felgenscheibe 5 hervor, die randwärtig von einem Felgenbett 6 begrenzt ist. Das Felgenbett 6 geht einstückig in ein inneres Felgenhorn 7 über, an das ein Gehäusering 8 anschliesst. Von aussen her ist beim Übergang von Felgenscheibe 5 zu Felgenbett 6 ein Felgenhornring 9 entfernbar der Felge 4 aufgesetzt, wobei entsprechende Befestigungselemente strichpunktiert angedeutet sind. Die Entfernbarkeit des Felgenhornringes 9 gewährleistet, dass bspw. auch ein Rollstuhlfahrer einen sich im Felgenbett 6 befindlichen, nicht näher gezeigten Reifen leicht entfernen und durch einen neuen ersetzen kann.

Insgesamt bildet die Felge 4 zusammen mit der Achswelle 1 einen Ringkanal 10 zur Aufnahme eines Motors 11 sowie einer Stoppbremse 12 aus. Dabei ist der Motor 11 als Elektromotor ausgebildet.
Sein Rotorteil 13 ist drehfest mit der Felge 4 verbunden, wobei der entsprechende Rotorteil 13 sich als Blechpacket gegen eine Innenfläche 14 des Felgenbettes 6 kreisringartig anschmiegt und sich einerseits gegen eine Schulter 15, die in die Innenfläche 14 eingeformt ist, abstützt.

Von der anderen Seite drückt ein Druckring 16 auf den Rotorteile 13 und diesen gegen die Schulter 15, so dass der Rotorteil 13 zwischen der Schulter 15 und dem Druckring 16 eingespannt ist. Die Festlegung bzw. das Einspannen geschieht über strichpunktiert angedeutete Befestigungselemente 17.

Parallel zu einer Hauptachse A des Antriebes sind dem Rotorteil 13 Magnetstreifen 18, insbesondere Permanentmagnetstreifen aufgesetzt. Die einzelnen Magnetstreifen 18 sind entlang dem Rotorteil 13 voneinander beabstandet angeordnet.

Zwischen den Magnetstreifen 18 und einem Statorteil 19, der ebenfalls als Blechpaket ausgebildet ist, befindet sich ein Luftspalt 20. Der Statorteil 19 ist, wie der Name sagt, feststehend und einem Innengehäusering 21 aufgeschoben und mit diesem drehfest verbunden. Hierzu bildet dieser Innengehäusering 21 ebenfalls eine Schulter 22 aus, gegen die der Statorteil 19 anschlägt. Verspannt wird der Statorteil 19 durch eine Stufenscheibe 23, die andernends der Schulter 23 auf den Statorteil drückt und über strichpunktiert angedeutete Befestigungselemente 24 mit dem Innengehäusering 21 verbunden ist. Beidseits des Statorteils 19 sind Freiräume 25.1 und 25.2 zur Aufnahme der jeweiligen Wickelköpfe des Statorteils 19 angedeutet.

Da der Druckring 16 zusammen mit der Felge 4 drehen kann, der Innengehäusering 21 jedoch feststehend ausgebildet ist, befindet sich zwischen beiden eine Dichtung 25, die bevorzugt aus zwei Kunststoffteilen besteht.

Dabei ist ein Kunststoffteil gegenüber dem anderen Kunststoffteil ebenfalls drehbar, zwischen beiden Kunststoffteilen befindet sich allerdings eine Labyrinthdichtung 46.

Zur Drehbarkeit der Felge 4 gegenüber dem Innengehäusering 21 ist zwischen dem Innengehäusering 21 und der Achswelle 1 und zwischen einem ferritischen Ring 27, der mit dem Innengehäusering 21 verbunden ist, und der Achswelle 1 jeweils ein Lager 28 und 29 vorgesehen. Am geeignetsten kann hier ein Wälzlager (Schulter-Schräglager) Anwendung finden. Beide Lager 28 und 29 sind durch entsprechende seitliche Anschläge verspannt, wobei die gesamte Festlegung über eine Mutter 30 erfolgt, die auf ein Aussengewinde 31 der Achswelle 1 aufgesetzt ist.

Der Innengehäusering 21 bildet zusammen mit der Achswelle 1 und dem ferritischen Ring 27 ein Bremsraum 32 aus, in den von der Achswelle 1 her drei Bremsscheiben 33.1, 33.2 und 33.3 einragen. Diese Bremsscheiben 33 können in dem Bremsraum 32 frei drehen. Sie bestehen aus einem entsprechenden Bremsbelagmaterial und sind der Achswelle 1 drehfest aufgesetzt. Hierzu besitzt die Achswelle 1 entsprechende parallel zur Achse A verlaufende Keilnuten 34, in die nicht näher gezeigte Keilleisten der Bremsscheiben 33 eingreifen. Auf diese Weise sind die Bremsscheiben 33 der Achswelle 1 aufgeschoben und können entlang der Achse A bewegt werden. Ihre Bewegung wird allerdings durch Bremsringe 35.1, 35.2, 35.3 und 35.4 begrenzt. Diese Bremsringe 35 weisen ebenfalls nicht näher gezeigte Keilnuten auf, in die Keilleisten 36 eingreifen, die wiederum von dem Innengehäusering 21 in den Bremsraum 32 einragen. Dabei kann der äussere Bremsring 35.1 zusätzlich über das Befestigungselement 24 mit dem Innengehäusering 25 verbunden sein. Die anderen Bremsringe 35.2, 35.3 und 35.4 sollten jedoch entlang der Achse A verschiebbar angeordnet sein.

Die gewünschte Bremswirkung zwischen den Bremsscheiben 33 und den Bremsringen 35 wird über einen Kraftspeicher 37 erzeugt, der im vorliegenden Ausführungsbeispiel eine entsprechend dimensionierte Feder bzw. Federn ist/sind. Dieser Kraftspeicher 37 drückt auf den äussersten Bremsring 35.4, über den dann die nachfolgenden Bremsscheiben 33 und Bremsringe 35 zusammengeschoben werden. Durch die Anordnung mehrerer Bremsscheiben 33 und Bremsringe 35 hintereinander kann der Durchmesser der gesamten Stoppbremse 12 extrem klein gehalten werden. Die Anzahl der Bremsscheiben 33 und Bremsringe 35 ist je nach dem geforderten Brems- bzw. Haltemoment beliebig wählbar.

Ein weiterer grosser Vorteil der Anordnung von mehreren Bremsscheiben und Bremsringen liegt darin, dass die Kraft des Kraftspeichers 37 relativ klein gehalten werden kann, wodurch auch eine Geräuschentwicklung beim Betätigen der Bremse sehr klein ist. Auch sind die elektrischen Verluste dadurch äusserst gering.

Zum Öffnen der Stoppbremse 12 ist in dem ferritischen Ring 27 ein Ringraum 38 angedeutet, in dem sich eine nicht näher gezeigte Magnetspule befindet. Solange der gesamte Antrieb mit Strom versorgt ist, zieht die Magnetspule den äussersten Bremsring 35.4 gegen die Kraft des Kraftspeichers 37 an, so dass zwischen den Bremsscheiben 33 und den Bremsringen 35 kein Kraftschluss besteht. Die Bremse ist gelöst.

Fällt jedoch der Strom aus, so wird auch die Magnetspule in dem Ringraum 38 nicht mit Strom versorgt, so dass sich der äusserste Bremsring 35.4 löst und sich die Bremsringe und Bremsscheiben unter dem Druck des Kraftspeichers 37 schliessen. Damit der äusserste Bremsring 35 mit der Magnetspule zusammenwirken kann, besteht der äusserste Bremsring 35.4 ebenfalls aus einem ferritischen Material, bspw. aus Stahl. Die übrigen Teile des Antriebes, bis möglicherweise auf die Achswelle 1, können aus Aluminium bestehen. Es muss jedoch Vorsorge getroffen werden, dass die Stoppbremse 12 auch dann gelöst werden kann, wenn kein Stromfluss zu der Magnetspule in dem Ringraum 38 stattfindet. Hierzu ist lediglich eine Öffnung 39 durch einen Deckel 40 und den ferritischen Ring 27 angedeutet, durch den ein entsprechender Hebel oder ein beliebiges Zugelement eingreift, mit dem von Hand der äusserste Bremsring 35.4 gegen den Kraftspeicher 37 geführt werden kann. Die Ausgestaltung dieses Hebels ist jedoch von untergeordneter Bedeutung.

Der gesamte Antrieb wird an einem, nicht näher gezeigten, elektrischen Fahrzeug festgelegt. Hierzu ist lediglich eine Befestigungsmöglichkeit 41 zwischen dem Innengehäusering 21 und dem Fahrzeug angedeutet.

## Patentansprüche

1. Antriebseinrichtung für ein elektrisch betriebenes Fahrzeug, insbesondere für einen Rollstuhl, mit zumindest einer Felge (4) mit Felgenbett (6) und einer Achswelle (1), wobei zwischen der Felge (4) und der Achswelle (1) ein Ringkanal zur Aufnahme eines Motors (11) und ein ringkanalförmiger Bremsraum (32) zur Aufnahme einer Bremse (12) ausgebildet sind, wobei Ringkanal und Bremsraum (32) durch einen feststehenden Innengehäusering (21) voneinander getrennt sind und die Achswelle (1) drehfest mit der Felge (4) verbunden und gegenüber dem feststehenden Innengehäusering (21) über zwei Lager (28, 29) drehbar abgestützt ist,
**dadurch gekennzeichnet,**
**dass** sich der ringkanalförmige Bremsraum (32) getrennt durch den Innengehäusering (21) innerhalb des Ringkanals zwischen den zwei Lagern (28, 29) befindet.

2. Antriebseinrichtung nach Anspruch 1, **dadurch gekennzeichnet, dass** der Innengehäusering (21) zum Ringkanal hin eine Schulter (22) ausbildet, zwischen der und einer Stufenscheibe (23) das Statorteil (19) des Motors (11) eingeklemmt ist, während das Rotorteil (13) zwischen einer der Innenflächen (14) des Felgenbettes (6) eingeformten Schulter (15) und einem Druckring (16) eingespannt ist.

3. Antriebseinrichtung nach Anspruch 1 oder 2, **dadurch gekennzeichnet, dass** zwischen dem Druckring (16) und dem Innengehäusering (21) eine Dichtung (25) angeordnet ist.

4. Antriebseinrichtung nach einem der Ansprüche 1 bis 3, **dadurch gekennzeichnet, dass** in den Bremsraum (32) eine Mehrzahl von Bremsscheiben (33) zwischen eine Mehrzahl von Bremsringen (35) einragen, die gegeneinander verschiebbar sind.

5. Antriebseinrichtung nach Anspruch 4, **dadurch gekennzeichnet, dass** jede Bremsscheibe (33) entlang einer Achse (A) der Achswelle (1, 1.1) verschiebbar auf dieser aufsitzt.

6. Antriebseinrichtung nach Anspruch 5, **dadurch gekennzeichnet, dass** jede Bremsscheibe (33) mit der Achswelle (1) eine Keilnutverbindung eingeht.

7. Antriebseinrichtung nach einem der Ansprüche 4 bis 6, **dadurch gekennzeichnet, dass** jeder Bremsring (35) mit einem Innengehäusering (21) eine Keilnutverbindung eingeht.

8. Antriebseinrichtung nach wenigstens einen der Ansprüche 4 bis 7, **dadurch gekennzeichnet, dass** dem äusseren Bremsring (35.4) ein in Richtung der Achse (A) wirkender Kraftspeicher (37) zugeordnet ist.

9. Antriebseinrichtung nach Anspruch 8, **dadurch gekennzeichnet, dass** dem äusseren Bremsring (35.4) eine axial wirkende Magnetspule zugeordnet ist.

10. Antriebseinrichtung nach Anspruch 9, **dadurch gekennzeichnet, dass** sich die Magnetspule in einem Ringraum (38) in einem ferritischen Ring (27) befindet, der Teil des Innengehäuseringes (21) ist.

11. Antriebseinrichtung nach wenigstens einen der Ansprüche 4 bis 10, **dadurch gekennzeichnet, dass** dem äusseren Bremsring (35.4) eine Einrichtung zum manuellen Ausführen des Bremsvorganges (35) zugeordnet ist.

## Claims

1. Driving mechanism for an electrically driven vehicle, more especially for a wheelchair, having at least one rim (4) with a rim bed (6) and an axle shaft (1), an annular duct being provided between the rim (4) and the axle shaft (1) for accommodating a motor (11), and an annular-duct-like brake chamber (32) being provided for accommodating a brake (12), annular duct and brake chamber (32) being separated from each other by a stationary internal housing ring (21), and the axle shaft (1) being non-rotatably connected to the rim (4) and being rotatably supported relative to the stationary internal housing ring (21) via two bearings (28, 29), **characterised in that** the annular-duct-like brake chamber (32), separated by the internal housing ring (21), is situated internally of the annular duct between the two bearings (28, 29).

2. Driving mechanism according to claim 1, **characterised in that** the internal housing ring (21) forms a shoulder (22) towards the annular duct, between which shoulder and a stepped disc (23) the stator part (19) of the motor (11) is clamped, while the rotor part (13) is clamped between a shoulder (15), formed in one of the internal surfaces (14) of the rim bed (6), and a pressure ring (16).

3. Driving mechanism according to claim 1 or 2, **characterised in that** a seal (25) is disposed between the pressure ring (16) and the internal housing ring (21).

4. Driving mechanism according to one of claims 1 to 3, **characterised in that** a plurality of brake discs (33) protrude into the brake chamber (32) between a plurality of brake rings (35) which are displaceable relative to one another.

5. Driving mechanism according to claim 4, **characterised in that** each brake disc (33) rests on the axle shaft (1, 1.1) so as to be displaceable along an axis (A) of said shaft.

6. Driving mechanism according to claim 5, **characterised in that** each brake disc (33) provides a wedge-shaped groove connection with the axle shaft (1).

7. Driving mechanism according to one of claims 4 to 6, **characterised in that** each brake ring (35) provides a wedge-shaped groove connection with an internal housing ring (21).

8. Driving mechanism according to at least one of claims 4 to 7, **characterised in that** an accumulator (37), operating in the direction of the axis (A), is associated with the outer brake ring (35.4).

9. Driving mechanism according to claim 8, **characterised in that** an axially operating magnet coil is associated with the outer brake ring (35.4).

10. Driving mechanism according to claim 9, **characterised in that** the magnet coil is situated in an annular chamber (38) in a ferritic ring (27), which is part of the internal housing ring (21).

11. Driving mechanism according to at least one of claims 4 to 10, **characterised in that** an apparatus for manually accomplishing the braking operation (35) is associated with the outer brake ring (35.4).

## Revendications

1. Installation d'entraînement pour un véhicule électrique, notamment un fauteuil roulant, comportant au moins une jante (4) avec une gorge (6) et un axe (1), un canal annulaire entre la jante (4) et l'axe (1) pour recevoir un moteur (11), et une chambre de frein (32) en forme de canal annulaire pour recevoir un frein (12), le canal annulaire et la chambre de frein (32) étant séparés par une cage intérieure annulaire (21)fixe, alors que l'axe (1) relié à la jante (4) s'appuie contre la cage intérieure annulaire fixe (21) en pouvant tourner par deux paliers (28, 29)
**caractérisée en ce que**
la chambre de frein (32) en forme de canal annulaire se trouve entre les deux paliers (28, 29,) séparée par la cage intérieure annulaire (21) à l'intérieur du canal annulaire.

2. Installation d'entraînement selon la revendication 1,
**caractérisée en ce que**
la cage intérieure annulaire (21) comporte un épaulement (22) du côté du canal annulaire, et entre cet épaulement et une rondelle à gradin (23) se trouve serrée la partie de stator (19) du moteur (11) alors que la partie de rotor (13) est serrée entre un épaulement (15) réalisé dans la surface intérieure (14) de la gorge de jante (6) et un anneau de pression (16).

3. Installation d'entraînement selon la revendication 1 ou 2,
**caractérisée par**
un joint (25) entre l'anneau de pression (16) et la cage intérieure annulaire (21).

4. Installation d'entraînement selon l'une des revendications 1 à 3,
**caractérisée en ce que**
un ensemble de disques de frein (33) est logé dans la chambre de frein (32), et entre ceux-ci pénètre un ensemble d'anneaux de frein (35) qui peuvent coulisser les uns par rapport aux autres.

5. Installation d'entraînement selon la revendication 4,
**caractérisée en ce que**
chaque disque de frein (33) est monté coulissant le long de l'axe géométrique (A) de l'axe (1.1).

6. Installation d'entraînement selon la revendication 5,
**caractérisée en ce que**
chaque disque de frein (33) est relié à l'axe (1) par une liaison à rainures et clavettes.

7. Installation d'entraînement selon l'une des revendications 4 à 6,
**caractérisée en ce que**
chaque anneau de frein (35) est relié à la cage intérieure annulaire (21) par une liaison à rainures et clavettes.

8. Installation d'entraînement selon au moins l'une des revendications 4 à 7,
**caractérisée en ce qu'**
un accumulateur de force (37) agissant en direction de l'axe (A) est associé à l'anneau de frein (35.4) le plus extérieur.

9. Installation d'entraînement selon la revendication 8,
**caractérisée en ce qu'**
une bobine électromagnétique à action axiale est associée à l'anneau de frein le plus extérieur (35.4).

10. Installation d'entraînement selon la revendication 9,
**caractérisée en ce que**
la bobine électromagnétique se trouve dans une chambre annulaire (38) dans l'anneau de ferrite (27) qui fait partie de la cage intérieure annulaire (21).

11. Installation d'entraînement selon au moins l'une des revendications 4 à 10,
**caractérisée en ce qu'**
une installation de desserrage manuel des anneaux de frein (35) est associée à l'anneau de frein extérieur (35.4).
